# EUROPEAN PATENT APPLICATION

(11) **EP 1 471 082 A1**
(43) Date of publication of application: **27.10.2004**
(21) Application number: 04075921.9
(22) Date of filing: 23.03.2004
(51) Int. Cl.: C08F 8/50, C08L 23/26

(54) **Elastomeric composition for the insulation of electric cables**

(30) Priority: 31.03.2003 IT MI20030629
(71) Applicant: Polimeri Europa S.p.A., 72100 Brindisi (IT)
(72) Inventor: Tanaglia, Tiziano, 40141 Bologna (IT)
(74) Representative: De Gregori, Antonella

(57) **Abstract**

An elastomeric blend is described, which can be used for preparing electric cables comprising one or more polymers selected from:
(i) a polymer (Base 1) obtained by means of shear treatment, in the presence of hydroperoxides, of a polymeric base essentially consisting of elastomeric copolymers of ethylene with propylene (EPM) or EPDM terpolymers and relative blends, EPDM terpolymers being preferred;
(ii) a copolymer of ethylene with alpha olefins, vinyl acetate or a derivative of acrylic acid (Base 2); said copolymer (ii) having a melting point lower than 115°C, preferably lower than 100°C.

## Description

The present invention relates to an elastomeric composition and its use in the preparation of insulated electric cables, preferably for medium-high tension electric cables.

As is known, polymers suitable for application in the field of cable insulation are used as a blend based on mineral fillers (mainly kaolin) in processes in which the metal cable is coated with the molten polymeric blend by passage through the characteristic "T"-shaped extruder head.

The polymeric blend must therefore have a very well controlled rheology in order to suitably form the insulating coating of the cable.

The blend must have a good fluidity during extrusion, without getting worse the form stability of the cable coating which, at the extrusion temperature and before vulcanisation, must not reveal ovalization phenomena (not a negligible factor, mainly in the case of medium-high tension cables which normally have considerable dimensions).

The blend, moreover, must not have an excessive swelling at the extrusion outlet, in order to avoid microcracks, lacerations and/or voids in the blend, which would get worse the electric properties.

In Italian patent application MI98A 002774 of the applicant, the use of hydroperoxy products was claimed to reduce the molecular weight of ethylene-propylene copolymers and to obtain polymers which are difficult to produce in industrial polymerization plants.

In the transformation process, object of the cited invention, the polymeric base was subjected to high shear treatment, in the presence of a hydroperoxy product with the characteristic of not undergoing significant decomposition under the thermal conditions of the treatment, this concept being represented through the half-time which must not be shorter than the duration time of the process, preferably not shorter than 10 times the process time. The process was carried out at high shear, applicable using the most common transformation machines of polymeric materials, preferably in a twin-screw extruder.

It has now been found that, by using as part of the polymeric base a product obtained according to the process described in EP 1013673, it is possible to obtain a blend for cable insulation having an enhanced rheology.

An object of the present invention therefore relates to a polymeric blend which can be used for the insulation coating of cables, having an enhanced rheology, this concept being expressed by the extrusion rate of the blend with an equal apparent molecular weight (ML, MFI 2.16 kg, etc.).

In accordance with this, the present invention relates to an elastomeric blend useful for the preparation of electric cables, comprising one or more polymers selected from:
(i) a polymer (Base 1) obtained by shear treatment, in the presence of hydroperoxides, of a polymeric base essentially consisting of elastomeric copolymers of ethylene with propylene (EPM) or EPDM terpolymers and mixtures thereof, EPDM terpolymers being preferred;
(ii) an ethylene copolymer with alpha olefins, vinyl acetate or acrylic acid derivative (Base 2); the above copolymer (ii) having a melting point lower than 115°C, preferably lower than 100°C.

The polymer (i) is obtained by treating an EP(D)M polymer with at least one hydroperoxide at a temperature ranging from 100 to 250°C, preferably from 160 to 200°C. Said hydroperoxide preferably has a half-time, at the process temperature, not shorter than 5 times the process time. The concentration of hydroperoxide ranges from 0.1 to 15% by weight with respect to the polymer, preferably from 0.5 to 4% by weight; the process shear is preferably higher than 100 sec⁻¹, more preferably higher than 500 sec⁻¹. The process for the preparation of the polymer (i) can be effected in an extruder in continuous or, preferably, in a twin-screw extruder of the ko-kneter type. More details on the preparation of polymer (i) can be found in EP 1013673.

The polymer (i) is in any case selected from EPM (ethylene-propylene) copolymers or EPDM terpolymers (ethylene - propylene - non-conjugated diene terpolymers), wherein the amount by weight of ethylene ranges from 85% to 40%, preferably from 76% to 45%. The possible non-conjugated diene is present in a maximum amount of 12% by weight, preferably of 5% by weight. The polymer (i), moreover, shows the following properties:
** Weight average molecular weight (Mw) from 70,000 to 280,000, preferably from 90,000 to 160,000;
** Polydispersity expressed as Mw/Mn lower than 5, preferably lower than 3.4;
** Ratio between the Melt Index fluidity at 21.6 kg and the Melt Index fluidity at 2.16 kg, both at a temperature of 230°C, ranging from 35 to 110, preferably from 45 to 90. The value of this ratio is in any case at least 40% higher than that of the non-treated polymer.

Typical examples of the copolymer (ii) are ethylene copolymers with 1-octene, 1-hexene, 1-butene, propylene; EPM, EPDM; EVA; EBA and EMA. In the preferred embodiment, the copolymer (ii) is an ethylene copolymer with an olefin selected from octene, hexene, butene, propylene.

The above copolymer (ii) is characterized by a linear structure and an MFI (E) higher than 1.5 g/10 min., preferably higher then 3.5 g/10'.

The sum by weight of (i) + (ii) being 100, the composition of said polymeric mixture consists of 100 parts of (i), preferably 95% of (i), even more preferably 80% of (i), the complement to 100 consisting of the polymer (ii).

The total amount of the polymeric components (i) + (ii) of the formulation object of the invention, being 100 parts, the elastomeric blend of the present invention also comprises:
from 25 to 300 parts of mineral filler, preferably from 30 to 100, said mineral filler being selected from calcined kaolin, talc, calcium and/or magnesium carbonate, silica, magnesium and aluminum hydroxide, and mixtures thereof; preferably kaolin;
from 0 to 15 parts of plasticizer selected from mineral oil and paraffinic wax, preferably paraffinic wax;
from 0 to 2 parts of a process coadjuvant additive, preferably selected from stearic acid and polyethylene glycol;
from 0 to 5 parts of coupling agent for mineral fillers, preferably selected from derivatives of vinyl silanes, for example vinyl triethoxy silane; vinyl tris(beta-methoxy ethoxy)silane;
from 0.5 to 5 parts of antioxidant, Anox^{R} HB (Great Lakes) being preferred;
from 0 to 10 parts of zinc oxide or lead oxide;
from 2 to 15 parts of a of peroxide vulcanization coadjuvant, selected from liquid polybutadienes, tri-allyl cyanide, N,N'-m-phenylene dimaleimide, ethylene dimethyl acrylate;
from 0.4 to 5 parts of peroxide selected from those normally used for EPR cross-linking, preferably at 40% carried in EPR (from 1 to 15 parts), dicumyl peroxide and di(tert-butyl peroxy isopropyl) benzene being preferred.

The following examples are provided for a better understanding of the invention.

### Experimental examples

Material used:
commercial EPDM: Polimeri Europa Dutral Ter 4033 having 25% wt of propylene, 4,9% wt of ENB; ML (1+4) at 100°C = 30
commercial LLDPE: Clearflex MQFO (density 0.90, MFI (E) = 20 g/10')
The t-butyl hydroperoxide (TBHP) used was supplied by Akzo Nobel Chem. at 70% in a water solution (trade-name Trigon-ox^{R} AW70).

In the following examples, the polymeric base used was a product obtained in a laboratory twin-screw extruder Maris TM35V, with a screw diameter of 35 mm and L/D = 32.

The test was effected with an hourly flow-rate of about 5 kg, leaving the extruder under regime conditions for 40 minutes before collecting the product.

### Preparation of polymeric base 1 (ref. 906/M/8)

Parent Polymer: Dutral TER4033
RPM = 280
Temperature of the high shear zones = 175°C
TBHP = 0.5%
Characterizations:
Solubility in xylene > 99.9%
MFI (L) = 1.0

### Comparative Example 1:

The following formulation was prepared in a laboratory closed mixer:
100 parts of TER4033
0.5 parts of stearic acid
5 parts of zinc oxide
1 part of A 172 (vinyl tris(beta-methoxy ethoxy)silane)
1.5 parts of Anox^{R} HB (antioxidant)
50 parts of Whitetex^{R} (Kaolin)
6 parts of Lithene^{R} PH (liquid polybutadiene)
5 parts of paraffinic wax.

After blending in an open mixer, a part of the blend was characterized with respect to the rate and behaviour in extrusion, ML at 125°C, MFI at different temperatures, whereas 6 parts of Peroximon^{R} F40 (di-tert-butyl peroxy isopropyl) benzene carried at 40% in EPR) were added to a part of the blend in an open mixer and vulcanized plates were produced at 180°C, in a compression press, for the tensile strength and tension set tests. The results are indicated in table 1.

### Example 2

The following formulation was prepared in a laboratory closed mixer:
100 parts of the polymeric Base 1 (Parent Polymer TER 4033, the same as example 1)
0.5 parts of stearic acid
5 parts of zinc oxide
1 part of A 172
1.5 parts of Anox^{R} HB (antioxidant)
50 parts of Whitetex^{R} (Kaolin)
6 parts of Lithene^{R} PH
5 parts of paraffinic wax.

After blending in an open mixer, a part of the blend was characterized with respect to the rate and behaviour in extrusion, ML at 125°C, MFI at different temperatures, whereas 6 parts of Peroximon F40 were added to a part of the blend in an open mixer and vulcanized plates were produced at 180°C, in a compression press, for the tensile strength and tension set tests. The results are indicated in table 1.

### Example 3

The following formulation was prepared in a laboratory closed mixer:
84 parts of the polymeric Base 1
16 parts of Cleaflex MQFO
0.5 parts of stearic acid
5 parts of zinc oxide
1 part of A 172
1.5 parts of Anox^{R} HB (antioxidant)
50 parts of Whitetex^{R} (Kaolin)
6 parts of Lithene^{R} PH
5 parts of paraffinic wax.

After blending in an open mixer, a part of the blend was characterized with respect to the rate and behaviour in extrusion, ML at 125°C, MFI at different temperatures, whereas 6 parts of Peroximon F40 were added to a part of the blend in an open mixer and vulcanized plates were produced at 180°C, in a compression press, for the tensile strength and tension set tests. The results are indicated in table 1.

**Table 1**

| **Formulation** | Comp. Ex. 1 | Ex. 2 | Ex. 3 |
|---|---|---|---|
| ML (1+4) 125°C blend | 12 | 22 | 19 |
| MFI (C) blend | 0.78 | 0.09 | 0.18 |
| MFI (E) blend | 1.88 | 0.26 | 0.48 |

| **Extrusion - ⌀ (die) = 10 mm - Screw rate 20 rev./min.** | | | |
|---|---|---|---|
| Rate (m/min) | 1.25 | 1.25 | 1.96 |
| Flow-rate (g/min) | 200 | 258 | 274 |
| Swelling (%) | 37 | 58 | 30 |

| **Tensile tests (on the vulcanised product)** | | | |
|---|---|---|---|
| Ultimate tensile stress (Mpa) | 9 | 12 | 12.7 |
| Elongation to break % | 170 | 220 | 280 |
| M100 (MPA) | 4.9 | 4.2 | 5.0 |
| Tension set 100% CEI | 8 | 6 | 18 |

From the data of table 1, it can be observed that although the formulation, object of the present invention, has a Mooney viscosity definitely higher than the reference product, it has the same extrusion rate and an even better flow-rate.

The second formulation (according to a preferred embodiment, using 16% of PE) shows an even better swelling with respect to the standard blend, and has a much better fluidity, even if the apparent molecular weight (ML and MFI) remains higher than that of the reference sample.

The elastic and tensile properties vary in relation to the amount of polyethylene, remaining, however, within the acceptable limits for the application.

### Comparative example 4

Comparative test effected with the best alternative product used in the field of high-tension cable insulation.

Commercial application blend without vulcanized additives.

A part of the blend was characterized with respect to the rate and behaviour during extrusion and ML at 125°C, whereas 6 parts of Peroximon F40 were added to a part of the blend in an open mixer and vulcanized plates were produced at 180°C, in a compression press, for the tensile strength and tension set tests. The results are indicated in table 2.

**Table 2**

| **Formulation** | Comp. Ex. 4 | Ex. 3 |
|---|---|---|
| ML (1+4) 125°C blend | 16 | 19 |
| MFI (C) blend | | 0.18 |
| MFI (E) blend | | 0.48 |

| **Extrusion - ⌀ (die) = 10 mm - Screw rate 20 rev./min.** | | |
|---|---|---|
| Rate (m/min) | 1.66 | 1.96 |
| Flow-rate (g/min) | 242 | 274 |
| Swelling (%) | 30 | 30 |

| **Tensile tests (on the vulcanised product)** | | |
|---|---|---|
| Ultimate tensile stress (Mpa) | 12.3 | 12.7 |
| Elongation to break % | 210 | 280 |
| M100 (MPA) | 5.1 | 5.0 |
| Tension set 100% CEI | 30 | 18 |

From the data of table 2, it can be observed that although the formulation, object of the present invention, has a Mooney viscosity higher than the reference product, it has a better extrusion rate and flow-rate.

The blend of the present invention also shows a better elastic properties: it is evident that it is possible to obtain further improvements in the mechanical and rheological performances if the ML viscosity and the tension set of the competitive product used as reference are reached (by increasing the amount of LLDPE in the blend).

The extrusion flow-rate of the product of example 3 is also higher than that of comparative example 4, in spite of the enormous difference between the ML viscosity of the blends.

## Claims

1. An elastomeric blend useful for the preparation of electric cables comprising one or more polymers selected from:
(i) a polymer (Base 1) obtained through shear treatment, in the presence of hydroperoxides, of a polymeric base essentially consisting of elastomeric copolymers of ethylene with propylene (EP) or EPDM terpolymers;
(ii) a copolymer of ethylene with alpha olefins, vinyl acetate or a derivative of acrylic acid (Base 2); said copolymer (ii) having a melting point lower than 115°C.

2. The elastomeric blend according to claim 1, wherein the copolymer (ii) is a copolymer of ethylene with alpha olefins.

3. The blend according to claim 2, wherein the alpha olefin is selected from 1-octene, 1-hexene, 1-butene, propylene.

4. The blend according to claim 3, wherein the alpha olefin is propylene.

5. The blend according to claim 1, wherein the copolymer (ii) has a melting point lower than 100°C.

6. The blend according to claim 1, wherein the polymer (i) is selected from EPDM terpolymers.

7. The blend according to claim 1, wherein the polymer (i) is obtained by treating an EP(D)M polymer with at least one hydroperoxide at a temperature ranging from 100°C to 250°C.

8. The blend according to claim 7, wherein the polymer (i) is obtained by treating an EP(D)M polymer with at least one hydroperoxide at a temperature ranging from 160°C to 200°C.

9. The blend according to claim 1, wherein the polymer (i) has the following properties:
** Weight average molecular weight (Mw) from 70,000 to 280,000;
** Polydispersity expressed as Mw/Mn lower than 5;
** Ratio between the Melt Index fluidity at 21.6 kg and the Melt Index fluidity at 2.16 kg, both at a temperature of 230°C, ranging from 35 to 110.

10. The blend according to claim 9, wherein the polymer (i) has the following properties:
** Weight average molecular weight (Mw) from 90,000 to 160,000;
** Polydispersity expressed as Mw/Mn lower than 3.4;
** Ratio between the Melt Index fluidity at 21.6 kg and the Melt Index fluidity at 2.16 kg, both at a temperature of 230°C, ranging from 45 to 90.
